# EUROPÄISCHE PATENTSCHRIFT

(11) **EP 2 620 565 B1**
(45) Veröffentlichungstag und Bekanntmachung des Hinweises auf die Patenterteilung: **14.05.2014**
(21) Anmeldenummer: 12152236.1
(22) Anmeldetag: 24.01.2012
(51) Int. Cl.: E04B 1/68, E06B 1/62

(54) **Dichtband zum Abdichten einer Fuge**
Sealing tape for sealing a gap
Bande étanche pour l'étanchéification d'un joint

(43) Veröffentlichungstag der Anmeldung: 31.07.2013
(73) Patentinhaber: ISO-Chemie GmbH, 73431 Aalen (DE)
(72) Erfinder:
(74) Vertreter: Wächter, Jochen

(56) Entgegenhaltungen:
- EP-A2- 1 653 019
- DE-A1- 19 641 415
- DE-U1-202010 012 343

## Beschreibung

Die Erfindung betrifft ein Dichtband zum Abdichten einer Fuge und ein geeignetes Herstellungsverfahren.

Dichtbänder aus weichem und flexiblem Schaumstoffmaterial werden in der Bautechnik generell zum Abdichten gegen Luftzug und Schlagregen eingesetzt. Im professionellen Hochbau werden Dichtbänder aus weichem und flexiblem Schaumstoff zwischen Fenster- und Türrahmen und einem Mauerwerk eingesetzt. Solche Dichtbänder können bis zu einigen Zentimetern dick sein und sind gewöhnlich an ihrer Unterseite mit einer Selbstklebeschicht versehen, mit der sie an den Rahmenprofilelementen von Fenstern und Türen angeklebt werden können. Dichtbänder dieser Art sind häufig mit einem Material imprägniert, das die Rückstellung des Schaumstoffmaterials aus einem komprimierten Zustand, in dem sie auf Rolle angeliefert werden, in einen entspannten Zustand verzögert, um die Montage des mit dem Dichtband versehenen Bauteils auf der Baustelle zu erleichtern.

Zur Verhinderung einer Dampfdiffusion und zur Verbesserung der Luftdichtheit werden Dichtbänder der vorgenannten Art benötigt, die mit einer Dampfsperre versehen sind. Aus DE 196 41 415 C2 die den nächstkommenden Stand der Technik bildet, ist ein Dichtband aus offenporigem Material in zu einer Scheibe aufgerollter Form zum Abdichten von Fugen oder Spalten gegen Luftzug und Schlagregen bekannt. Dabei ist wenigstens eine Sperrschicht innerhalb des Dichtbandes in solcher Konfiguration angeordnet, dass sie und die angrenzenden offenporigen Bereiche in axialer Richtung aufgereiht sind. Die Sperrschicht verläuft also in radialer Richtung der Dichtbandrolle und liefert somit eine Dampfdiffusionssperre in einer Funktionsrichtung des Dichtbands, die sich von der einen Seitenflanke des Dichtbands zur anderen Seitenflanke des Dichtbands erstreckt.

Um ein Dichtband der letztgenannten Art herzustellen, werden großflächige Sperrschichten durch lagenweises Laminieren und/oder Verkleben von Platten- oder Bahnware eines offenporigen Rohschaummaterials zu Laminatblöcken ausgebildet. Die Laminatblöcke werden dann orthogonal zu den großflächigen Sperrschichten aus Laminierungsmaterial Klebstoff zu Tafeln mit Sperrschichten getrennt, so dass sich nach dem Trennen die Sperrschichten parallel zu einem Rand der Tafel und senkrecht durch die Tafel erstrecken. Eine solche Tafel wird dann unter Kompression so zu einer Rolle aufgewickelt, dass die Sperrschichten und das offenporige Material auf dem Umfang der Rolle in axialer Richtung aufgereiht sind. Anschließen wird die Rolle zwischen einzelnen Sperrschichten in Scheiben getrennt. Diese Verfahrensweise ist relativ kompliziert und erfordert eine hohe Maßhaltigkeit des Schaumstoffmaterials bei der Verarbeitung und beim Aufwickeln zur Rolle, weil sonst beim Trennen der Rolle in Scheiben die Gefahr einer Beschädigung der Sperrschichten besteht.

Aus EP 1 653 019 A2 ist zudem ein Dichtband aus Weichschaumstoff bekannt, bei dem eine elastische Kappe, die als Sperrschicht dient, auf der Wetterseite des Schaumstoffs aufgebracht ist. Die Kappe kann dabei einen Schlitz aufweisen, der die Bewegungsmöglichkeit des Schaumstoffs während der Entspannung senkrecht zur Funktionsrichtung des Dichtbands erhöht.

Der vorliegenden Erfindung liegt die Aufgabe zugrunde, ein Dichtband zum Abdichten einer Fuge zu schaffen, das eine allenfalls geringe Luft- und eine reduzierte Dampfdiffusionsdurchlässigkeit zeigt und besonders einfach und kostengünstig herstellbar ist.

Diese Aufgabe wird durch die Merkmale des Anspruchs 1 bzw. des Anspruchs 12 gelöst.

Erfindungsgemäß weist das Dichtband zum Abdichten einer Fuge eine Oberseite, eine Unterseite und zwei längs laufende Seitenflanken auf, wobei eine Richtung parallel zu Oberseite und Unterseite und quer zu den Seitenflanken eine Funktionsrichtung des Dichtbands definiert. Dabei weist das Dichtband mindestens einen ersten Schaumstoffstreifen und einen zweiten Schaumstoffstreifen eines nach Kompression rückstellfähigen Weichschaumstoffs auf, die in Funktionsrichtung nebeneinander angeordnet sind, und außerdem weist das Dichtband einen folienartigen Streifen auf, der zwischen dem ersten Schaumstoffstreifen und dem zweiten Schaumstoffstreifen derart angeordnet ist, dass er eine Dampfdiffusions- und Luftdurchlässigkeit des Dichtbands in Funktionsrichtung reduziert. Der folienartige Streifen weist einen im wesentlichen U- oder V-förmig angeordneten Abschnitt auf, und ein erster Schenkel und ein zweiter Schenkel des im wesentlichen U- oder V-förmig angeordneten Abschnitts des folienartigen Streifens erstrecken sich in Richtung der Oberseite des Dichtbands.

Mit dieser Ausgestaltung wird eine Verbesserung der Dichtfunktion gegenüber herkömmlichen Weichschaumbändern geschaffen, wobei die Ausrüstung des Weichschaumstoffs mit dem folienartigen Streifen auf einfache und automatisierte Weise möglich ist.

Vorzugsweise ist der erste Schenkel des im wesentlichen U- oder V-förmig angeordneten Abschnitts des folienartigen Streifens zumindest teilweise mit einer dem zweiten Schaumstoffstreifen zugewandten Seitenfläche des ersten Schaumstoffstreifens verhaftet ist, und der zweite Schenkel des im wesentlichen U- oder V-förmig angeordneten Abschnitts des folienartigen Streifens ist zumindest teilweise mit einer dem ersten Schaumstoffstreifen zugewandten Seitenfläche des zweiten Schaumstoffsteifens verhaftet. Dadurch wird der folienartige Streifen sicher an seinem Platz gehalten, und unabhängig von der weiteren Konfiguration sind die beiden Schaumstoffstreifen zumindest durch den folienartigen Streifen fest verbunden.

Besonders bevorzugt ist es hierbei, wenn der folienartige Streifen an die beiden Schaumstoffstreifen laminiert oder mit diesen verklebt ist.

Im Rahmen einer besonders einfachen Herstellungsvariante ist ein Scheitel oder eine Spitze des im wesentlichen U- oder V-förmig angeordneten Abschnitts des folienartigen Streifens innerhalb des Dichtbands angeordnet.

Die Schenkel des im wesentlichen U- oder V-förmig angeordneten Abschnitts des folienartigen Streifens schließen dabei bei voll expandiertem Dichtband vorzugsweise einen Winkel von zwischen 10° und 0°, mehr bevorzugt zwischen 3° und 0°, ein. Im Falle von 0° liegen die beiden Schenkel des folienartigen Streifens somit direkt aufeinander auf, so dass kein Lufteinschluss innerhalb des Dichtbands möglich ist.

Entsprechend verlaufen die Schenkel des im wesentlichen U- oder V-förmig angeordneten Abschnitts des folienartigen Streifens im wesentlichen senkrecht zur Funktionsrichtung und parallel zu den Seitenflanken des Dichtbands. Auf diese Weise wird eine optimale Ausnutzung der Sperreigenschaften des folienartigen Streifens in Funktionsrichtung gewährleistet.

Der Scheitel oder die Spitze des im wesentlichen U- oder V-förmig angeordneten Abschnitts des folienartigen Streifens ist vorzugsweise in einem Bereich von zwischen 1 und 40 %, mehr bevorzugt von zwischen 5 und 20 %, einer Höhe des Dichtbands bei voll expandiertem Dichtband angeordnet. Dadurch wird gewährleistet, dass die Sperrfunktion des folienartigen Streifens nahezu über die gesamte Höhe des Dichtbandes wirkt und gleichzeitig noch Raum für eine direkte Verbindung zwischen den beiden Schaumstoffstreifen verbleibt.

Hierzu sind in solchen Fällen die in Funktionsrichtung nebeneinander angeordneten Schaumstoffstreifen in einem Bereich der Unterseite des Dichtbands direkt oder indirekt fest miteinander verbunden.

Beispielsweise kann im Bereich der Unterseite des Dichtbands eine durchgängige Schicht, vorzugsweise aus einem biegesteifen Material, angeordnet sein. Die Schaumstoffstreifen können mit der durchgängigen Schicht fest verbunden sein. Hierdurch wird eine feste Verbindung zwischen den Schaumstoffstreifen hergestellt. Bei Verwendung einer biegesteifen Schicht ermöglicht die Biegesteifigkeit eine Ausbildung von Dichtbändern nahezu beliebiger Breite und verbessert die Anbringungsmöglichkeiten des Dichtbands am entsprechenden Rahmenprofil des abzudichtenden Bauteils. Ebenso kann die durchgängige Schicht als ein ein- oder doppelseitiges Klebeband ausgebildet sein, das die beiden Schaumstoffstreifen verbindet.

Alternativ oder ergänzend können die in Funktionsrichtung nebeneinander angeordneten Schaumstoffstreifen im Bereich der Unterseite des Dichtbands integral miteinander ausgestaltet sein und somit einen durchgängigen Verbindungssteg bilden.

Das erfindungsgemäße Verfahren zur Ausrüstung eines Dichtbandrohlings mit einem folienartigen Streifen umfasst folgende Schritte:
- Bereitstellen eines Dichtbandrohlings mit einer Oberseite, einer Unterseite und zwei längs laufenden Seitenflanken, wobei eine Richtung parallel zu Oberseite und Unterseite und quer zu den Seitenflanken eine Funktionsrichtung des Dichtbandrohlings definiert, und wobei der Dichtbandrohling eine Schicht aus Weichschaumstoff aufweist;
- Einbringen mindestens eines Einschnitts oder einer Ausnehmung in die Schicht aus Weichschaumstoff von der Oberseite des Dichtbandrohlings her und dadurch Bilden von mindestens zwei miteinander verbundenen Abschnitten des Weichschaumstoffs;
- seitliches Aufklappen von zwei benachbarten Abschnitten des Weichschaumstoffs und Aufbringen des folienartigen Streifens auf zumindest Teilbereiche der aufgeklappten Abschnitte; und
- Freigeben der zwei benachbarten Abschnitte des Weichschaumstoffs und dadurch Ermöglichen der Rückstellung des Weichschaumstoffs zum Bilden eines im wesentlichen U- oder V-förmig angeordneten Abschnitts des folienartigen Streifens.

Dieses erfindungsgemäße Verfahren zur Ausrüstung eines Dichtbandrohlings mit einem folienartigen Streifen ist besonders einfach und kostengünstig und kann voll automatisiert erfolgen.

Der Schritt des Aufklappens von zwei benachbarten Abschnitten des Weichschaumstoffs erfolgt dabei vorzugsweise durch mindestens eine Verdrängungswalze. Die Verdrängungswalze klappt die beiden benachbarten Abschnitte des Weichschaumstoffs in Richtung der jeweils näher gelegenen Seitenflanke des Dichtbandrohlings, also vorzugsweise senkrecht zur Richtung des Einschnitts. Auf diese Weise kann das Aufklappen maschinell und mit geringem Aufwand erfolgen.

Ebenso ist es im Sinne eines automatisierten Ausrüstverfahrens vorteilhaft, wenn der folienartige Streifen auf die aufgeklappten Abschnitte des Weichschaumstoffs durch mindestens eine Aufbringwalze aufgebracht wird.

Der Schritt des Aufbringens des folienartigen Streifens auf zumindest Teilbereiche der aufgeklappten Abschnitte kann dabei vorzugsweise unmittelbar nach dem Schritt des Aufklappens, besonders bevorzugt in einem kombinierten Arbeitsschritt, erfolgen. Hierbei würde die mindestens eine Verdrängungswalze und die mindestens eine Aufbringwalze unmittelbar hintereinander angeordnet sein, und die Schaumstoffbahn würde kurz nacheinander an der mindestens einen Verdrängungswalze und der mindestens einen Aufbringwalze vorbeigeführt werden. Dies stellt sicher, dass zum Zeitpunkt des Aufbringens der Weichschaumstoff immer noch die aufgeklappte Position inne hat. Ebenso ist es allerdings möglich, bei Schaumstoffen, die zu einer besonders starken Verzögerung der Rückstellung imprägniert sind, die mindestens eine Verdrängungswalze und die mindestens eine Aufbringwalze auch in einem zeitlich oder räumlich größeren Abstand voneinander wirken zu lassen.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer ersten Ausführungsform des erfindungsgemäßen Dichtbands;
- Fig. 2: ist eine schematische Perspektivansicht einer alternativen Ausführungsform des erfindungsgemäßen Dichtbands;
- Fig. 3: ist eine schematische Perspektivansicht einer weiteren alternativen Ausführungsform des erfindungsgemäßen Dichtbands; und
- Fig. 4a bis 4c: zeigen schematisch den Ablauf eines bevorzugten Herstellungsverfahrens des erfindungsgemäßen Dichtbands, bei dem ein Dichtbandrohling mit einem folienartigen Streifen ausgestattet wird.

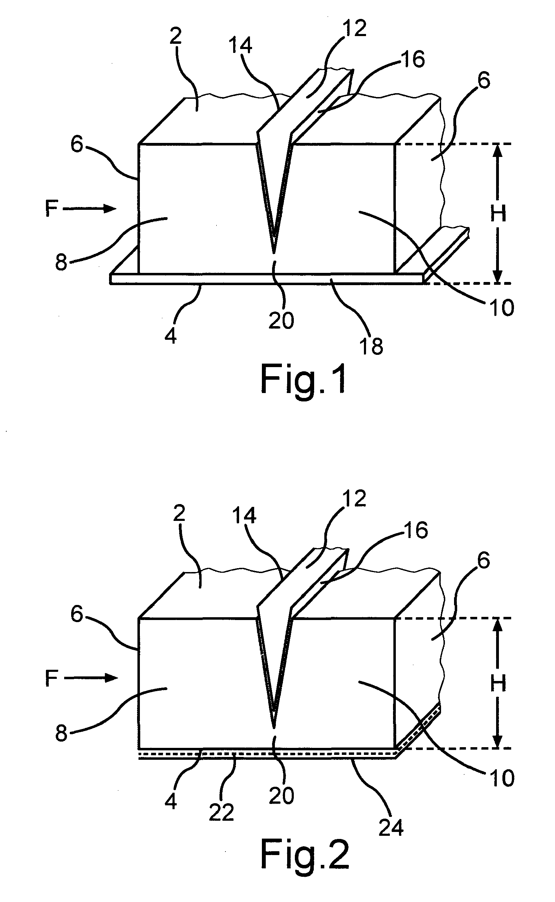

In Fig. 1 bis 3 sind drei verschiedene Ausführungsformen des erfindungsgemäßen Dichtbands in schematischer Perspektivansicht bei vollständig expandiertem Dichtband dargestellt.

Jedes Dichtband weist eine Oberseite 2, eine Unterseite 4 und zwei längslaufende Seitenflanken 6 auf, wobei eine Richtung parallel zur Oberseite 2 und Unterseite 4 und quer zu den Seitenflanken 6 eine Funktionsrichtung (Pfeil F) des Dichtbands definiert. In dieser Funktionsrichtung F soll das Dichtband im Einbauzustand gegen Schlagregen schützen und den Luftdurchtritt sowie die Dampfdiffusion zumindest stark einschränken. Wie aus Fig. 1 bis 3 nicht ersichtlich, erstreckt sich das Dichtband in Längsrichtung (also in die Zeichnungsebene hinein, gekennzeichnet durch die abgebrochenen Kanten) weiter als in Querrichtung, und es liegt entweder als Streifenware vor oder kann auch zu einer Rolle oder Spule aufgewickelt sein. Besonders bevorzugt ist eine schneckenförmige Rolle, bei der die einzelnen Windungen des Dichtbands unmittelbar aufeinander zu liegen kommen.

Das Dichtband weist in den dargestellten Beispielsfällen zwei Schaumstoffstreifen 8, 10 eines nach Kompression rückstellfähigen Weichschaumstoffs auf, die in Funktionsrichtung F nebeneinander angeordnet sind. Es können aber auch mehr als zwei Schaumstoffstreifen 8, 10 nebeneinander angeordnet sein.

In den dargestellten Ausführungsbeispielen haben die Schaumstoffstreifen 8, 10 aus Weichschaumstoff einen im wesentlichen rechteckigen Querschnitt, es sind aber auch beliebige andere Formen denkbar. Die Schaumstoffstreifen 8, 10 können aus jedem beliebigen offenzelligen oder geschlossenzelligen Weichschaumstoff gebildet sein, zum Beispiel aus Polyurethan oder Polyethylen, und können für eine verzögerte Rückstellung nach Kompression imprägniert sein. Das Raumgewicht derartiger Weichschaumstoffe liegt zwischen 20 und 200 kg/m³.

Die Materialien des ersten Schaumstoffstreifens 8 und des zweiten Schaumstoffstreifens 10 können voneinander abweichen, etwa um unterschiedliche Luftdurchlässigkeiten des Dichtbands im Innen- und Außenbereich bzw. ein Dampfdiffusionsgefälle zu gewährleisten. Die Breite der Schaumstoffstreifen 8, 10 kann auch unterschiedlich sein, ebenso ihre Höhe oder ihre Imprägnierung.

In der Praxis sind die Schaumstoffstreifen 8, 10 meist so vorkomprimiert, dass sie beim Entspannen vorzugsweise bis auf etwa das Fünf- bis Zehnfache ihrer im vorkomprimierten Zustand eingenommenen Dicke expandieren können, wovon aber häufig nur etwa die Hälfte ausgenutzt wird, um eine sichere Anlage an dem Gebäudeteil zu gewährleisten, das dem abzudichtenden Profilelement gegenüber liegt.

Nach dem Lösen der Komprimierung, beispielsweise durch Abwickeln des Dichtbands von der Dichtbandrolle, verbleibt in der Regel nur so viel Zeit für das Anbringen des Dichtbands an dem abzudichtenden Bauteil und das Einsetzen des Bauteils in die dafür vorgesehene Fuge im Mauerwerk, bis die verzögerte Expansion der Schaumstoffstreifen 8, 10 das Dichtband zu groß zum Einfügen in die Öffnung macht. Da heutige Imprägnierungen eine Verzögerung der Expansion der Schaumstoffstreifen 8, 10 um mehrere Stunden ermöglichen, stellt dies aber keine wesentliche Einschränkung dar. Wenn das Dichtband in Streifenform vorliegt, ist es in der Regel notwendig, den Streifen vor dem Einfügen in die Fuge zusammen zu drücken.

Grundsätzlich könnte das erfindungsgemäße Dichtband auch bereits vor dem Transport des abzudichtenden Bauteils an diesem befestigt werden. Hierzu wäre es allerdings notwendig, dass das Dichtband durch eine Umhüllung (nicht dargestellt) an seiner Expansion gehindert wird. Dann müsste nach dem Einbau in die entsprechende Gebäudeöffnung vor Ort lediglich noch die Umhüllung geöffnet werden, woraufhin die Schaumstoffstreifen 8, 10 nach oben expandieren und die Abdichtung der Fuge gewährleisten.

Das Dichtband weist auch einen folienartigen Streifen 12 auf, der zwischen zwei benachbarten Schaumstoffstreifen 8, 10 derart angeordnet und mit diesen verhaftet ist, dass er eine Dampfdiffusionsdurchlässigkeit des Dichtbands in Funktionsrichtung F reduziert oder sogar nahezu vollständig eliminiert. Der folienartige Streifen 12 weist dabei zumindest einen im wesentlichen U- oder V-förmig angeordneten Abschnitt auf, und die Schenkel 14, 16 der U- oder V-Form des folienartigen Streifens 12 erstrecken sich in Richtung der Oberseite 2 des Dichtbands. Im vollständig expandierten Zustand des Dichtbands können die Schenkel 14, 16 des folienartigen Streifens 12 (wie in Fig. 1 bis 3 dargestellt) nach oben über die Oberseite 2 des Dichtbands überstehen, bündig mit dieser abschließen (nicht dargestellt) oder innerhalb des Dichtbands enden (nicht dargestellt) und somit nicht an die Oberseite 2 des Dichtbands heranreichen. Die Schenkel 14, 16 müssen auch nicht gleich lang sein.

Der erste Schenkel 14 des im wesentlichen U- oder V-förmig angeordneten Abschnitts des folienartigen Streifens 12 ist dabei zumindest abschnittsweise mit einer dem zweiten Schaumstoffstreifen 10 zugewandten Seitenfläche des ersten Schaumstoffstreifens 8 verhaftet, und der zweite Schenkel 16 des im wesentlichen U- oder V-förmig angeordneten Abschnitts des folienartigen Streifens 12 ist zumindest abschnittsweise mit einer dem ersten Schaumstoffstreifen 8 zugewandten Seitenfläche des zweiten Schaumstoffstreifens 10 verhaftet. Vorzugsweise ist der folienartige Streifen 12 an die Schaumstoffstreifen 8, 10 geklebt, ebenso kommt jedoch eine Laminierung in Frage.

Vorzugsweise besteht der folienartige Streifen 12 aus Kunststoff, etwa aus Polyethylen, Polypropylen, Polyvinylchlorid oder Kautschuk. Unter den Begriff "folienartig" sollen aber auch alle möglichen anderen Materialien fallen, beispielsweise geschäumter Kunststoff, etwa aus Polyethylen, Polypropylen oder Zellkautschuk. Daneben kann das Material des folienartige Streifen 12 auch Papier, beispielsweise Wachspapier, Aluminium oder ein Gittergewebe sein, das für den genannten Einsatzzweck geeignet ist. Beispielsweise sind auch laminierte Folien verwendbar, die aus einer Kunststofffolie bestehen, die mit einem Trägermaterial (zum Beispiel Vlies) laminiert ist, oder gewebeverstärkte Folien. Auch Kombinationen dieser Materialien sind möglich. Besonders bevorzugt sind luftdichte Folien, welche die Fuge zur Rauminnenseite abdichten auch und die Dampfdiffusionsdurchlässigkeit deutlich reduzieren. Die Dicke des folienartigen Streifens 12 beträgt zwischen 10 µm und 5 mm, vorzugsweise zwischen 50 µm und 2 mm.

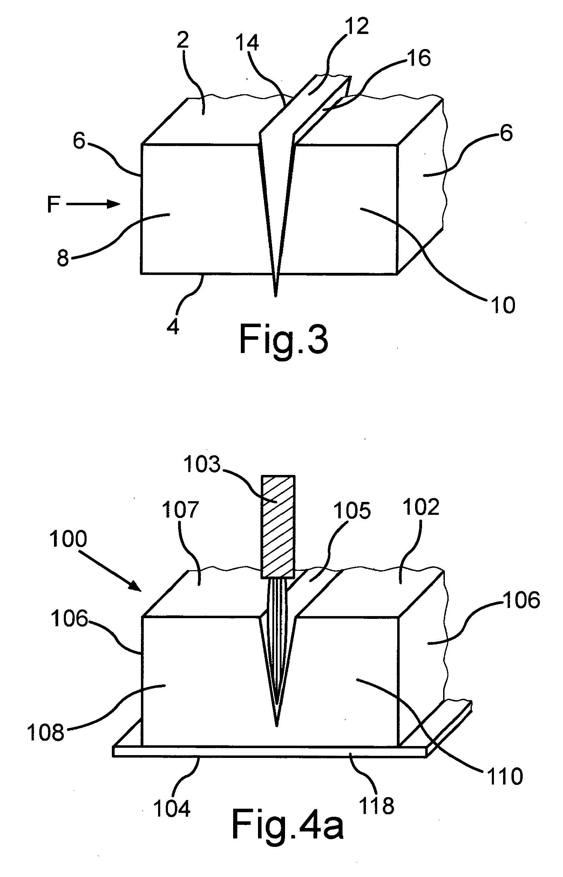

In den Ausführungsformen der Fig. 1 und 2 ist ein Scheitel bzw. eine Spitze des im wesentlichen U- oder V-förmig angeordneten Abschnitts des folienartigen Streifens 12 innerhalb des Dichtbands angeordnet. In Fig. 3 ragt der Scheitel bzw. die Spitze des im wesentlichen U- oder V-förmig angeordneten Abschnitts des folienartigen Streifens 12 nach unten über die Unterseite 4 des Dichtbands hinaus. Grundsätzlich ist es aber vorteilhaft, wenn der Scheitel bzw. die Spitze des im wesentlichen U- oder V-förmig angeordneten Abschnitts des folienartigen Streifens 12 in einem Bereich von zwischen 1 und 40 %, vorzugsweise von zwischen 5 und 20 %, einer Höhe H des Dichtbands bei voll expandiertem Dichtband angeordnet ist.

Die Schenkel 14, 16 des im wesentlichen U- oder V-förmig angeordneten Abschnitts des folienartigen Streifens 12 schließen im entspannten Zustand der Schaumstoffstreifen 8, 10 vorzugsweise einen Winkel von zwischen 10° und 0°, mehr bevorzugt zwischen 3° und 0°, ein. Im Falle von sauberen Verdrängungsschnitten bei der weiter unten näher beschriebenen Herstellung der Ausführungsformen gemäß Fig. 1 und 2 oder der bloßen Aneinanderreihung von zwei getrennten Schaumstoffstreifen 8, 10 zu einer Ausgestaltung wie in Fig. 3 wird der Winkel zwischen den Schenkeln 14, 16 in der Regel 0° betragen, d.h. die Schenkel 14, 16 liegen unmittelbar aufeinander auf. Meist werden die Schenkel 14, 16 des im wesentlichen U- oder V-förmig angeordneten Abschnitts des folienartigen Streifens 12 also im wesentlichen senkrecht zur Funktionsrichtung F und parallel zu den Seitenflanken 6 des Dichtbands verlaufen. In den Zeichnungen wurde aus Gründen der Übersichtlichkeit der Winkel zwischen den Schenkeln 14, 16 hin zu einem größeren Winkel modifiziert. Ein noch größerer Winkel bis hin zu 45° zwischen den Schenkeln 14, 16 ist ebenfalls denkbar, wenn bei der Herstellung eine entsprechende Ausnehmung und kein Verdrängungsschnitt in den Weichschaumstoff geformt wird. Ebenso ist eine Ausgestaltung denkbar, bei der die beiden Schenkel 14, 16 parallel zueinander, aber voneinander beabstandet angeordnet sind. Viele weitere Ausgestaltungen sind denkbar.

In jedem Fall sind die beiden Schaumstoffstreifen 8, 10 über den folienartigen Streifen 12 fest miteinander verbunden. In der Ausführungsform gemäß Fig. 3 ist dies auch die einzige Verbindung zwischen den beiden Schaumstoffstreifen 8, 10.

Eigentlich ist es aber bevorzugt, wenn der erste Schaumstoffstreifen 8 und der zweite Schaumstoffstreifen 10 in einem Bereich der Unterseite 4 des Dichtbands direkt oder indirekt fest miteinander verbunden sind.

Beispielsweise kann, wie in Fig. 1 dargestellt, im Bereich der Unterseite 4 des Dichtbands eine durchgängige Schicht 18, vorzugsweise aus einem biegesteifen Material oder auch bestehend aus einem ein- oder doppelseitigen Klebeband, angeordnet sein. In diesem Fall ist es vorteilhaft, wenn die Schaumstoffstreifen 8, 10 mit der durchgängigen Schicht 18 fest verbunden sind, beispielsweise durch Laminierung oder unter Einsatz eines geeigneten Klebemittels. Die durchgängige Schicht 18 kann seitlich mit den Schaumstoffstreifen 8, 10 abschließen, oder sie kann auch, wie in Fig. 1 dargestellt, seitlich über diese hinausragen, wodurch die Seitenflanken 6 des Dichtbands keine ebenen Flächen mehr darstellen. Die Schicht 18 kann beispielsweise verwendet werden, um das Dichtband auf vorteilhafte Weise mit dem abzudichtenden Bauteil zu verbinden. Im Falle der Verwendung eines biegesteifen Materials kann dies beispielsweise auch durch Verklemmung in Profilkanälen des Bauteils erfolgen. Außerdem stabilisiert eine Schicht 18 aus biegesteifem Material das Dichtband in Breitenrichtung.

Als Material der durchgängigen Schicht 18 ist vorzugsweise ein Schaumstoff vorgesehen, der eine höhere, bevorzugt deutlich höhere Biegefestigkeit aufweist als die Schaumstoffstreifen 8, 10. Außerdem kommt beispielsweise Pappe in Frage, es sind aber auch alle anderen möglichen biegesteifen Materialien, z.B. harte Kunststoffe, verwendbar.

In der in Fig. 1 dargestellten Ausführungsform sind die beiden Schaumstoffstreifen 8, 10 im Bereich der Unterseite 4 des Dichtbands außerdem integral miteinander ausgestaltet und bilden somit einen durchgängigen Verbindungssteg 20. Ebenso wäre es möglich, die Ausführungsform der Fig. 1 so abzuwandeln, dass die beiden Schaumstoffstreifen 8, 10 vollständig voneinander getrennt sind und somit kein durchgängiger Verbindungssteg 20 aufgrund einer integralen Ausgestaltung der beiden Schaumstoffstreifen 8, 10 vorhanden ist.

Hingegen ist es bei der Ausführungsform gemäß Fig. 2 vorteilhaft, wenn die integrale Ausgestaltung der beiden Schaumstoffstreifen 8, 10 und somit die Bildung des durchgängigen Verbindungsstegs 20 vorhanden sind, da dadurch das Dichtband als kompakte Einheit zusammengehalten wird.

In der Ausführungsform der Fig. 2 ist außerdem an der Unterseite 4 des Dichtbands eine gestrichelt dargestellte Klebeschicht 22 angeordnet, die von einer abziehbaren Abdeckfolie 24 bedeckt ist. Die Klebeschicht 22 dient nach dem Abziehen der Abdeckfolie 24 zur Befestigung des Dichtbands an dem abzudichtenden Bauteil mittels Verklebung. Der Einsatz dieser Klebeschicht 22 und der Abdeckfolie 24 ist auch bei den anderen aufgeführten Ausführungsformen denkbar, entfällt aber logischerweise bei Verwendung eines doppelseitigen Klebebands als durchgängige Schicht 18. Aus Gründen der besseren Darstellung wurden in Fig. 2 die Klebeschicht 22, die Abdeckfolie 24 und die Schaumstoffstreifen 8, 10 in einem gewissen Abstand dargestellt. In Wirklichkeit liegen diese eng aneinander auf. Dasselbe gilt für den U- oder V-förmigen Abschnitt des folienartigen Streifens 12, der in der Regel dicht an den inneren Seitenwänden der beiden Schaumstoffstreifen 8, 10 anliegt bzw. mit diesen verhaftet ist.

Unter Bezugnahme auf die Fig. 4a bis 4c und Fig. 1 wird nun ein bevorzugtes Verfahren zur Herstellung des erfindungsgemäßen Dichtbands beschrieben. Dabei wird ein bereits vorgefertigter Dichtbandrohling 100 mit einem folienartigen Streifen 12 ausgerüstet.

In Fig. 4a wird der Dichtbandrohling 100 bereitgestellt, der eine Oberseite 102, eine Unterseite 104 und zwei längs laufende Seitenflanken 106 aufweist, wobei eine Richtung parallel zu Oberseite 102 und Unterseite 104 und quer zu den Seitenflanken 106 eine Funktionsrichtung F des Dichtbandrohlings 100 und somit auch des späteren Dichtbands definiert. Der Dichtbandrohling 100 weist auch eine Schicht 107 aus Weichschaumstoff auf. Im dargestellten Beispielsfall weist der Dichtbandrohling 100 außerdem eine durchgängige Schicht 118 aus biegesteifem Material auf. Diese muss jedoch nicht vorliegen.

Nunmehr wird, beispielsweise mittels eines Messers 103, von der Oberseite 102 des Dichtbandrohlings 100 her mindestens ein Einschnitt 105 oder eine Ausnehmung in die Schicht 107 aus Weichschaumstoff eingebracht und somit werden mindestens zwei miteinander verbundene Abschnitte 108, 110 des Weichschaumstoffs gebildet. Der Einschnitt 105 oder die Ausnehmung reicht vorzugsweise so weit in das Dichtband hinein, wie weiter oben für die Anordnung des Scheitels bzw. der Spitze des im wesentlichen U- oder V-förmigen Abschnitts des folienartigen Streifens 12 als Vorzugsbereich angegeben wurde. Bevorzugt ist ein bloßer Verdrängungsschnitt, es kann aber auch Material entnommen werden.

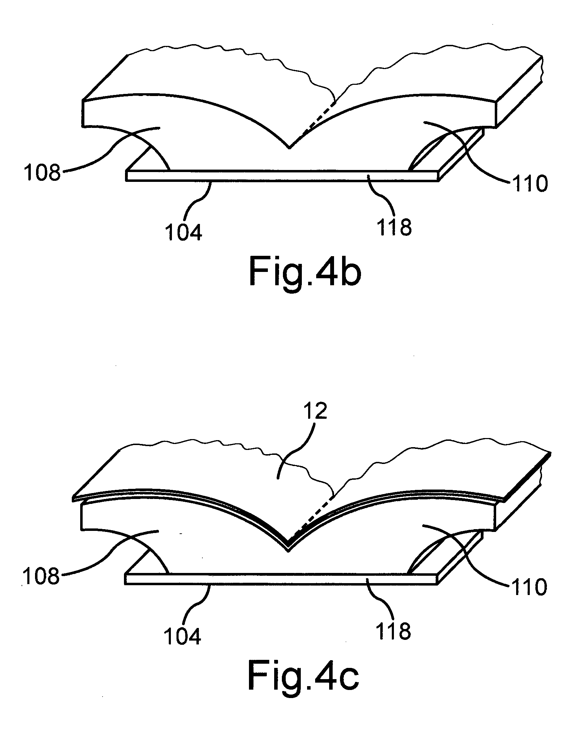

Anschließend werden, wie in Fig. 4b schematisch dargestellt ist, zwei benachbarte Abschnitte 108, 110 des Weichschaumstoffs seitlich aufgeklappt. Dies geschieht vorzugsweise durch mindestens eine Verdrängungswalze (nicht dargestellt). Die mindestens eine Verdrängungswalze ist darauf ausgerichtet, die beiden Abschnitte 108, 110 des Weichschaumstoffs des an der Walze vorbeigeführten Dichtbandrohlings 100 voneinander wegzudrängen und somit dem Dichtbandrohling 100 eine flügelförmige und vorzugsweise möglichst ebene Gestalt zu verleihen.

Eine derartige Verdrängungswalze kann eine besondere Form besitzen (z.B. bananenförmig) oder kann auch speziell angeordnet sein, um beim Aufklappen der Abschnitte 108, 110 des Weichschaumstoffs zu unterstützen. Die Walzenachse ist normalerweise in Richtung der Funktionsrichtung F des Dichtbandrohlings 100 angeordnet, es sind aber auch andere Anordnungen schräg hierzu denkbar. Ebenso können mehrere Verdrängungswalzen nacheinander angeordnet sein.

Auch die Verwendung mindestens eines Walzenpaares das einen Walzenspalt bildet, durch den der Dichtbandrohling 100 geführt wird, zum Aufklappen der Abschnitte 108, 110 des Weichschaumstoffs ist denkbar. Es sind aber auch andere Aufklappmechanismen denkbar.

Anschließend wird, wie in Fig. 4c schematisch dargestellt, der folienartige Streifen 12 auf zumindest Teilbereiche der aufgeklappten Abschnitte 108, 110 des Weichschaumstoffs aufgebracht. Bevorzugt ist hier wiederum die Aufbringung des folienartigen Streifens 12 durch mindestens eine Aufbringwalze (nicht dargestellt), beispielsweise eine sogenannte Laminierwalze. Daher wird die Gestalt des Dichtbands während der Aufbringung des folienartigen Streifens 12 auch noch flacher und ebener sein als in der Zeichnung dargestellt.

Die mindestens eine Aufbringwalze ist stromab vor der mindestens einen Verdrängungswalze angeordnet. Im Falle der Ausbildung als Laminierwalze laminiert diese den folienartigen Streifen 12 auf die Abschnitte 108, 110 des Weichschaumstoffs auf. Hierzu kann es vorteilhaft sein, wenn die Laminierwalze beheizt ist. Ebenso kann eine Anbringung des folienartigen Streifens 12 auf die Abschnitte 108, 110 des Weichschaumstoffs mittels Verklebung erfolgen. Auch in diesem Fall ist es vorteilhaft, wenn der Dichtbandrohling 100 von mindestens einer Presswalze bearbeitet wird, um den folienartigen Streifen 12 auf den Weichschaumstoff zu pressen.

Die Drehachse der Aufbringwalze liegt in der Regel senkrecht zur Bewegungsrichtung des Dichtbandrohlings 100. Auch hier kann ein Paar von Aufbringwalzen, die einen Walzenspalt bilden, durch den die Bahn des Dichtbandrohlings 100 hindurch läuft, verwendet werden.

Besonders bevorzugt ist es, wenn der Schritt des Aufbringens des folienartigen Streifens 12 auf zumindest Teilbereiche der aufgeklappten Abschnitte 108, 110 des Weichschaumstoffs unmittelbar nach dem Schritt des Aufklappens, und vorzugsweise sogar in einem kombinierten Arbeitsschritt, erfolgt. Beispielsweise können die mindestens eine Verdrängungswalze und die mindestens eine Aufbringwalze unmittelbar hintereinander angeordnet sein, so dass die Abschnitte 108, 110 des Weichschaumstoffs sich beim Aufbringen des folienartigen Streifens 12 immer noch in dem seitlich aufgeklappten, platt gedrückten Zustand befinden. Bei Verwendung von imprägnierten Weichschaumstoffen ist dies nicht zwangsläufig erforderlich, da durch die Imprägnierung eine verzögerte Rückstellung des Weichschaumstoffs zu beobachten ist und somit die Abschnitte 108, 110 des Weichschaumstoffs länger in der seitlich aufgeklappten Stellung verharren.

Anschließend werden die beiden benachbarten Abschnitte 108, 110 des Weichschaumstoffs freigegeben, wodurch die Rückstellung des Weichschaumstoffs ermöglicht wird. Dadurch wird dann der U- oder V-förmig angeordnete Abschnitt des folienartigen Streifens 12 gebildet, wobei die Schenkel 14, 16 des U- oder V-förmig angeordneten Abschnitts des folienartigen Streifens 12 sich in Richtung der Oberseite 102 des Dichtbandrohlings 100 erstrecken. Den Endzustand dieses beschriebenen Herstellungsbeispiels bildet das Dichtband aus Fig. 1.

Es sollte klar sein, dass die beiden benachbarten Abschnitte 108, 110 des Dichtbandrohlings 100 den beiden Schaumstoffstreifen 8, 10 des fertigen Dichtbands entsprechen. Ebenso entsprechen die Oberseite 102, Unterseite 104 und die Seitenflanken 106 des Dichtbandrohlings 100 der Oberseite 2, Unterseite 4 und den längslaufenden Seitenflanken 6 des fertigen Dichtbands. Insofern gelten für die Anordnung und die Geometrie des Dichtbandrohlings 100 sowie des folienartigen Streifens 12 innerhalb des Dichtbandrohlings 100 dieselben Angaben wie zuvor unter Bezugnahme auf Fig. 1 bis 3 für das Dichtband beschrieben.

Es existieren auch weitere Herstellungsverfahren für die erfindungsgemäßen Dichtbänder.

## Patentansprüche

1. Dichtband zum Abdichten einer Fuge mit
einer Oberseite (2), einer Unterseite (4) und zwei längslaufenden Seitenflanken (6), wobei eine Richtung parallel zu Oberseite (2) und Unterseite (4) und quer zu den Seitenflanken (6) eine Funktionsrichtung (F) des Dichtbands definiert,
wobei das Dichtband mindestens einen ersten Schaumstoffstreifen (8) und einen zweiten Schaumstoffstreifen (10) aus einem nach Kompression rückstellfähigen Weichschaumstoff aufweist, die in Funktionsrichtung (F) nebeneinander angeordnet sind,
und wobei das Dichtband einen folienartigen Streifen (12) aufweist, der zwischen dem ersten Schaumstoffstreifen (8) und dem zweiten Schaumstoffstreifen (10) derart angeordnet ist, dass er eine Dampfdiffusionsdurchlässigkeit des Dichtbands in Funktionsrichtung (F) reduziert,
**dadurch gekennzeichnet, dass**
der folienartige Streifen (12) einen im wesentlichen U- oder V-förmig angeordneten Abschnitt aufweist, und dass ein erster Schenkel (14) und ein zweiter Schenkel (16) des im wesentlichen U- oder V-förmig angeordneten Abschnitts des folienartigen Streifens (12) sich in Richtung der Oberseite (2) des Dichtbands erstrecken.

2. Dichtband nach Anspruch 1, **dadurch gekennzeichnet, dass** der erste Schenkel (14) des im wesentlichen U- oder V-förmig angeordneten Abschnitts des folienartigen Streifens (12) zumindest teilweise mit einer dem zweiten Schaumstoffstreifen (10) zugewandten Seitenfläche des ersten Schaumstoffstreifens (8) verhaftet ist, und dass der zweite Schenkel (16) des im wesentlichen U- oder V-förmig angeordneten Abschnitts des folienartigen Streifens (12) zumindest teilweise mit einer dem ersten Schaumstoffstreifen (8) zugewandten Seitenfläche des zweiten Schaumstoffsteifens (10) verhaftet ist.

3. Dichtband nach Anspruch 1 oder 2, **dadurch gekennzeichnet, dass** der folienartige Streifen (12) an die beiden Schaumstoffstreifen (8, 10) laminiert oder mit diesen verklebt ist.

4. Dichtband nach einem der vorangehenden Ansprüche, **dadurch gekennzeichnet, dass** ein Scheitel oder eine Spitze des im wesentlichen U- oder V-förmig angeordneten Abschnitts des folienartigen Streifens (12) innerhalb des Dichtbands angeordnet ist.

5. Dichtband nach einem der vorangehenden Ansprüche, **dadurch gekennzeichnet, dass** die Schenkel (14, 16) des im wesentlichen U- oder V-förmig angeordneten Abschnitts des folienartigen Streifens (12) bei voll expandiertem Dichtband einen Winkel von zwischen 10° und 0°, vorzugsweise zwischen 3° und 0°, einschließen.

6. Dichtband nach einem der vorangehenden Ansprüche, **dadurch gekennzeichnet, dass** die Schenkel (14, 16) des im wesentlichen U- oder V-förmig angeordneten Abschnitts des folienartigen Streifens (12) im wesentlichen senkrecht zur Funktionsrichtung (F) und parallel zu den Seitenflanken (6) des Dichtbands verlaufen.

7. Dichtband nach einem der vorangehenden Ansprüche, **dadurch gekennzeichnet, dass** ein Scheitel oder eine Spitze des im wesentlichen U- oder V-förmig angeordneten Abschnitts des folienartigen Streifens (12) in einem Bereich von zwischen 1 und 40 %, vorzugsweise von zwischen 5 und 20 %, einer Höhe (H) des Dichtbands bei voll expandiertem Dichtband angeordnet ist.

8. Dichtband nach einem der vorangehenden Ansprüche, **dadurch gekennzeichnet, dass** der erste Schaumstoffstreifen (8) und der zweite Schaumstoffstreifen (10) in einem Bereich der Unterseite (4) des Dichtbands direkt oder indirekt fest miteinander verbunden sind.

9. Dichtband nach einem der vorangehenden Ansprüche, **dadurch gekennzeichnet, dass** im Bereich der Unterseite (4) des Dichtbands eine durchgängige Schicht (18), vorzugsweise aus einem biegesteifen Material, angeordnet ist.

10. Dichtband nach Anspruch 9, **dadurch gekennzeichnet, dass** die beiden Schaumstoffstreifen (8, 10) mit der durchgängigen Schicht (18) fest verbunden sind.

11. Dichtband nach einem der Ansprüche 8 bis 10, **dadurch gekennzeichnet, dass** die beiden Schaumstoffstreifen (8, 10) im Bereich der Unterseite (4) des Dichtbands integral miteinander ausgestaltet sind und somit einen durchgängigen Verbindungssteg (20) bilden.

12. Verfahren zur Ausrüstung eines Dichtbandrohlings (100) mit einem folienartigen Streifen (12), mit folgenden Schritten:
- Bereitstellen eines Dichtbandrohlings (100) mit einer Oberseite (102), einer Unterseite (104) und zwei längslaufenden Seitenflanken (106), wobei eine Richtung parallel zu Oberseite (102) und Unterseite (104) und quer zu den Seitenflanken (106) eine Funktionsrichtung (F) des Dichtbandrohlings (100) definiert, und wobei der Dichtbandrohling (100) eine Schicht (107) aus Weichschaumstoff aufweist;
- Einbringen mindestens eines Einschnitts (105) oder einer Ausnehmung in die Schicht (107) aus Weichschaumstoff von der Oberseite (102) des Dichtbandrohlings (100) her und dadurch Bilden von mindestens zwei miteinander verbundenen Abschnitten (108, 110) des Weichschaumstoffs;
- seitliches Aufklappen von zwei benachbarten Abschnitten (108, 110) des Weichschaumstoffs und Aufbringen des folienartigen Streifens (12) auf zumindest Teilbereiche der aufgeklappten Abschnitte (108, 110); und
- Freigeben der zwei benachbarten Abschnitte (108, 110) des Weichschaumstoffs und dadurch Ermöglichen der Rückstellung des Weichschaumstoffs zum Bilden eines im wesentlichen U- oder V-förmig angeordneten Abschnitts des folienartigen Streifens (12).

13. Verfahren nach Anspruch 12, **dadurch gekennzeichnet, dass** der Schritt des Aufklappens von zwei benachbarten Abschnitten (108, 110) des Weichschaumstoffs durch mindestens eine Verdrängungswalze erfolgt.

14. Verfahren nach Anspruch 13, **dadurch gekennzeichnet, dass** der folienartige Streifen (12) auf die aufgeklappten Abschnitte (108, 110) des Weichschaumstoffs durch mindestens eine Aufbringwalze aufgebracht wird.

15. Verfahren nach Anspruch 14, **dadurch gekennzeichnet, dass** der Schritt des Aufbringens des folienartigen Streifens (12) auf zumindest Teilbereiche der aufgeklappten Abschnitte (108, 110) unmittelbar nach dem Schritt des Aufklappens, vorzugsweise in einem kombinierten Arbeitsschritt, erfolgt.

## Claims

1. A sealing tape for sealing a joint with
an upper side (2), a lower side (4) and two longitudinally extending lateral edges (6), wherein a direction parallel to the upper side (2) and lower side (4) and transverse to the lateral edges (6) defines a functional direction (F) of the sealing tape,
wherein the sealing tape provides at least one first foam-material strip (8) and a second foam-material strip (10) made from a soft-foam material capable of self-restoring after compression, which are arranged side-by-side in the functional direction (F),
and wherein the sealing tape provides a foil-like strip (12) which is arranged between the first foam-material strip (8) and the second foam-material strip (10) in such a manner that it reduces a vapour-diffusion permeability of the sealing tape in the functional direction (F),
**characterised in that**
the foil-like strip (12) provides a portion arranged substantially in a U-shape or V-shape, and that a first arm (14) and a second arm (16) of the portion of the foil-like strip (12) arranged substantially in a U-shape or V-shape extend in the direction towards the upper side (2) of the sealing tape.

2. The sealing tape according to claim 1,
**characterised in that**
the first arm (14) of the portion of the foil-like strip (12) arranged substantially in a U-shape or V-shape is at least partially glued to a lateral surface of the first foam-material strip (8) facing towards the second foam-material strip (10), and that the second arm (16) of the portion of the foil-like strip (12) arranged substantially in a U-shape or V-shape is at least partially glued to a lateral surface of the second foam-material strip (10) facing towards the first foam-material strip (8).

3. The sealing tape according to claim 1 or 2,
**characterised in that**
the foil-like strip (12) is laminated onto the two foam-material strips (8, 10) or glued to the latter.

4. The sealing tape according to any one of the preceding claims,
**characterised in that**
an apex or a peak of the portion of the foil-like strip (12) arranged substantially in a U-shape or V-shape is arranged inside the sealing tape.

5. The sealing tape according to any one of the preceding claims,
**characterised in that**
the arms (14, 16) of the portion of the foil-like strip (12) arranged substantially in a U-shape or V-shape enclose an angle of between 10° and 0°, preferably between 3° and 0° with fully extended sealing tape.

6. The sealing tape according to any one of the preceding claims,
**characterised in that**
the arms (14, 16) of the portion of the foil-like strip (12) arranged substantially in a U-shape or V-shape extend substantially perpendicular to the functional direction (F) and parallel to the lateral edges (6) of the sealing tape.

7. The sealing tape according to any one of the preceding claims,
**characterised in that**
an apex or a peak of the portion of the foil-like strip (12) arranged substantially in a U-shape or V-shape is arranged in a region of between 1 and 40%, preferably of between 5 and 20%, of a height (H) of the sealing tape with fully extended sealing tape.

8. The sealing tape according to any one of the preceding claims,
**characterised in that**
the first foam-material strip (8) and the second foam-material strip (10) are, directly or indirectly, firmly connected to one another in a region of the lower side (4) of the sealing tape.

9. The sealing tape according to any one of the preceding claims,
**characterised in that**
a continuous layer (18), preferably made from a material resistant to bending, is arranged in the region of the lower side (4) of the sealing tape.

10. The sealing tape according to claim 9,
**characterised in that**
the two foam-material strips (8, 10) are firmly connected to the continuous layer (18).

11. The sealing tape according to any one of claims 8 to 10,
**characterised in that**
the two foam-material strips (8, 10) are embodied integrally with one another in the region of the lower side (4) of the sealing tape and accordingly form a continuous connecting web (20).

12. A method for fitting a sealing-strip blank (100) with a foil-like strip (12) with the following steps:
- Providing a sealing-strip blank (100) with an upper side (102), a lower side (104) and two longitudinally extending lateral edges (106),
wherein a direction parallel to the upper side (102) and lower side (104) and transverse to the lateral edges (106) defines a functional direction (F) of the sealing-strip blank (100),
and wherein the sealing-strip blank (100) provides a layer (107) made from soft-foam material;
- Introducing at least one incision (105) or a recess into the layer (107) made of soft-foam material from the upper side (102) of the sealing-strip blank (100) and accordingly forming at least two portions (108, 110) of the soft-foam material connected to one another;
- Lateral folding apart of two adjacent portions (108, 110) of the soft-foam material and applying the foil-like strip (12) onto at least partial regions of the folded-apart portions (108, 110); and
- Releasing the two adjacent portions (108, 110) of the soft-foam material and therefore allowing the restoration of the soft-foam material in order to form a portion of the foil-like strip (12) arranged substantially in a U-shape or V-shape.

13. The method according to claim 12,
**characterised in that**
the step of folding apart of two adjacent portions (108, 110) of the soft-foam material is implemented by at least one displacement roller.

14. The method according to claim 13,
**characterised in that**
the foil-like strip (12) is applied to the folded-apart portions (108, 110) of the soft-foam material by at least one application roller.

15. The method according to claim 14,
**characterised in that**
the step of applying the foil-like strip (12) to at least partial regions of the folded-apart portions (108, 110) is implemented immediately after the step of folding apart, preferably in a combined operational step.

## Revendications

1. Bande d'étanchéité pour l'étanchéification d'un joint, comprenant
un côté supérieur (2), un côté inférieur (4) et deux flancs latéraux longitudinaux (6), une direction parallèle au côté supérieur (2) et au côté inférieur (4) et transversale aux flancs latéraux (6) définissant une direction fonctionnelle (F) de la bande d'étanchéité,
la bande d'étanchéité présentant au moins un premier ruban de mousse (8) et un second ruban de mousse (10) en une mousse souple à reprise élastique après la compression, lesquels rubans sont juxtaposés dans la direction fonctionnelle (F),
et la bande d'étanchéité présentant un ruban (12) en forme de feuille, qui est disposé entre le premier ruban de mousse (8) et le second ruban de mousse (10) de telle sorte qu'il réduit une perméabilité à la diffusion de vapeur de la bande d'étanchéité dans la direction fonctionnelle (F),
**caractérisée en ce que**
le ruban (12) en forme de feuille présente une section disposée essentiellement en U ou en V, et qu'une première branche (14) et une seconde branche (16) de la section disposée essentiellement en U ou en V du ruban (12) en forme de feuille s'étendent en direction du côté supérieur (2) de la bande d'étanchéité.

2. Bande d'étanchéité selon la revendication 1, **caractérisée en ce que** la première branche (14) de la section disposée essentiellement en U ou en V du ruban (12) en forme de feuille est fixée, au moins en partie, avec une face latérale, tournée vers le second ruban de mousse (10), du premier ruban de mousse (8), et que la seconde branche (16) de la section disposée essentiellement en U ou en V du ruban (12) en forme de feuille est fixée, au moins en partie, avec une face latérale, tournée vers le premier ruban de mousse (8), du second ruban de mousse (10).

3. Bande d'étanchéité selon l'une des revendications 1 et 2, **caractérisée en ce que** le ruban (12) en forme de feuille est laminé sur les deux rubans de mousse (8, 10) ou collé avec ces derniers.

4. Bande d'étanchéité selon l'une des revendications précédentes, **caractérisée en ce qu'**un sommet ou une pointe de la section disposée essentiellement en U ou en V du ruban (12) en forme de feuille est disposé à l'intérieur de la bande d'étanchéité.

5. Bande d'étanchéité selon l'une des revendications précédentes, **caractérisée en ce que** les branches (14, 16) de la section disposée essentiellement en U ou en V du ruban (12) en forme de feuille forment, dans l'état d'expansion totale de la bande d'étanchéité, un angle compris entre 10° et 0°, de préférence entre 3° et 0°.

6. Bande d'étanchéité selon l'une des revendications précédentes, **caractérisée en ce que** les branches (14, 16) de la section disposée essentiellement en U ou en V du ruban (12) en forme de feuille s'étendent de façon essentiellement perpendiculaire à la direction fonctionnelle (F) et parallèle aux flancs latéraux (6) de la bande d'étanchéité.

7. Bande d'étanchéité selon l'une des revendications précédentes, **caractérisée en ce qu'**un sommet ou une pointe de la section disposée essentiellement en U ou en V du ruban (12) en forme de feuille est disposé dans une plage de 1 à 40%, de préférence de 5 à 20%, d'une hauteur (H) de la bande d'étanchéité dans l'état d'expansion totale de cette dernière.

8. Bande d'étanchéité selon l'une des revendications précédentes, **caractérisée en ce que** le premier ruban de mousse (8) et le second ruban de mousse (10) sont assemblés fixement entre eux, directement ou indirectement, dans une zone du côté inférieur (4) de la bande d'étanchéité.

9. Bande d'étanchéité selon l'une des revendications précédentes, **caractérisée en ce qu'**un couche continue (18), de préférence en une matière résistante à la flexion, est disposée dans la zone du côté inférieur (4) de la bande d'étanchéité.

10. Bande d'étanchéité selon la revendication 9, **caractérisée en ce que** les deux rubans de mousse (8, 10) sont assemblés fixement avec la couche continue (18).

11. Bande d'étanchéité selon l'une des revendications 8 à 10, **caractérisée en ce que** les deux rubans de mousse (8, 10) ont une configuration mutuelle intégrale dans la zone du côté inférieur (4) de la bande d'étanchéité, et forment ainsi une traverse d'assemblage (20) continue.

12. Procédé pour équiper une ébauche de bande d'étanchéité (100) d'un ruban (12) en forme de feuille, comprenant les étapes suivantes .
- la mise à disposition d'une ébauche de bande d'étanchéité (100) avec un côté supérieur (102), un côté inférieur (104) et deux flancs latéraux longitudinaux (106), une direction parallèle au côté supérieur (102) et au côté inférieur (104) et transversale aux flancs latéraux (106) définissant une direction fonctionnelle (F) de l'ébauche de bande d'étanchéité (100), et l'ébauche de bande d'étanchéité (100) présentant une couche (107) en mousse souple ;
- l'apport d'au moins une entaille (105) ou d'un creux dans la couche (107) en mousse souple à partir du côté supérieur (102) de l'ébauche de bande d'étanchéité (100), et la formation de ce fait d'au moins deux sections (108, 110), assemblées entre elles, de la mousse souple ;
- le rabattement latéral de deux sections voisines (108, 110) de la mousse souple et la pose du ruban (12) en forme de feuille sur au moins des zones partielles des sections (108, 110) rabattues ; et
- le relâchement des deux sections voisines (108, 110) de la mousse souple et la possibilité de ce fait de la reprise élastique de la mousse souple pour la formation d'une section disposée essentiellement en U ou en V du ruban (12) en forme de feuille.

13. Procédé selon la revendication 12, **caractérisé en ce que** l'étape du rabattement de deux sections voisines (108, 110) de la mousse souple s'effectue par au moins un cylindre de déplacement.

14. Procédé selon la revendication 13, **caractérisé en ce que** le ruban (12) en forme de feuille est posé sur les sections rabattues (108, 110) de la mousse souple par au moins un cylindre d'application.

15. Procédé selon la revendication 14, **caractérisé en ce que** l'étape de la pose du ruban (12) en forme de feuille sur au moins des zones partielles des sections (108, 110) rabattues s'effectue directement après l'étape du rabattement, de préférence dans une étape de travail combinée.
